# EUROPÄISCHE PATENTSCHRIFT

(11) **EP 0 602 386 B1**
(45) Veröffentlichungstag und Bekanntmachung des Hinweises auf die Patenterteilung: **11.02.1998**
(21) Anmeldenummer: 93118195.2
(22) Anmeldetag: 10.11.1993
(51) Int. Cl.: H01C 17/06

(54) **Verfahren zur Herstellung einer haftfesten Kunststoff-Metall-Verbindung**
Manufacturing method for a plastic-metal composition with good adhesive strength
Méthode de fabrication d'une composition en métal plastique de bonne adhésion

(30) Priorität: 02.12.1992 DE 4240569
(43) Veröffentlichungstag der Anmeldung: 22.06.1994
(73) Patentinhaber: ROBERT BOSCH GMBH, 70442 Stuttgart (DE)
(72) Erfinder: Schorr, Harald, Dipl.-Ing., D-70839 Gerlingen (DE)

(56) Entgegenhaltungen:
- EP-A- 0 453 217
- WO-A-91/20088
- PATENT ABSTRACTS OF JAPAN vol. 016 no. 154 (E-1190) ,15.April 1992 & JP-A-04 007802 (DAITO TSUSHINKI KK) 13.Januar 1992,
- PATENT ABSTRACTS OF JAPAN vol. 015 no. 022 (E-1024) ,18.Januar 1991 & JP-A-02 268402 (TDK CORP) 2.November 1990,
- PATENT ABSTRACTS OF JAPAN vol. 005 no. 034 (E-048) ,4.März 1981 & JP-A-55 160453 (SANYO ELECTRIC CO LTD;OTHERS: 01) 13.Dezember 1980,
- PATENT ABSTRACTS OF JAPAN vol. 013 no. 155 (E-743) ,14.April 1989 & JP-A-63 312601 (TDK CORP) 21.Dezember 1988,

## Beschreibung

Die Erfindung betrifft ein Verfahren zur Herstellung einer haftfesten Kunststoff-Metall-Verbindung nach dem Oberbegriff des Anspruchs 1.

Es ist bekannt, bei elektronischen Schaltungen, die Potentiometer enthalten, diese als sogenannte Dickschichtpotentiometer auszubilden und mit ihrer leitenden Kunststoffschicht direkt auf Leiterbahnen zu befestigen. Dabei müssen zwischen der Kunststoffschicht, die in der Regel ein leitfähiges Kunststoffpaste-Kohle-Material ist, und der Leiterbahn genau definierte Haftungsbedingungen eingehalten werden, da schon geringste Ungenauigkeiten in der Kontaktierung zu Veränderungen des elektrischen Widerstandes der Potentiometer führen und damit eine sichere vorausbestimmte Funktion des Potentiometers nicht mehr gewährleistet werden kann. Die Potentiometer weisen entweder sehr große Toleranzen auf oder es kann zu Funktionsausfällen kommen. Der Widerstandswert der Potentiometer wird in großem Maße durch die Haftung auf der Leiterbahn mitbestimmt.

Es ist Aufgabe der Erfindung, ein Verfahren der gattungsgemäßen Art zu schaffen, mit dem eine Kunststoff-Metall-Verbindung, insbesondere ein Potentiometer-Leiterbahn-System geschaffen werden kann, das sich durch eine hohe Haftung auszeichnet.

Erfindungsgemäß wird die Aufgabe durch die im kennzeichnenden Teil des Anspruchs 1 genannten Merkmale gelöst.

Es wurde gefunden, daß wenn die metallischen Leiterbahnen vor Aufbringen des Potentiometers mit einer definierten Mikrorauhigkeit versehen werden, genau diese Bedingungen erfüllt werden.

Durch die definierte Mikrorauhigkeit wird erreicht, daß sich auf der Metalloberfläche der Leiterbahn eine bestimmte Oberflächenstruktur in der Art einstellt, daß die anschließend aufgebrachte leitende Kunststoffschicht (Potentiometerbahn) des Potentiometers, die im Verhältnis zum Leiterbahnmaterial eine geringere Festigkeit aufweist, sich den geschaffenen Mikrostrukturen form- und kraftschlüssig infolge der sich an den Grenzflächen einstellenden Bedingungen anpaßt und somit eine den Bedingungen angepaßte ausreichend gute Haftung erreicht wird.

In besonders vorteilhafter Ausgestaltung der Erfindung ist vorgesehen, daß die Mikrorauhigkeit so ausgebildet wird, daß eine auf der Leiterbahn vorhandene Schutzschicht mit einer Stärke von vorzugsweise weniger als 2 µm durch die, vorzugsweise durch Mikrostrahlen, erzeugte Rauhigkeit entstehenden Täler, diese die Schutzschicht nicht durchbrechen.

Hiermit wird in vorteilhafter Weise erreicht, daß die insbesondere zu Korrosionsschutzzwecken aufgebrachte Schutzschicht, beispielsweise aus Gold, nicht zerstört wird, und somit weiterhin der Korrosionsschutz und die elektrische Leitfähigkeit gewährleistet ist.

Weitere vorteilhafte Ausgestaltungen der Erfindung ergeben sich aus den in den Unteransprüchen angegebenen Merkmalen.

Die Erfindung wird nachfolgend in einem Ausführungsbeispiel anhand der zugehörigen Zeichnung, die schematisch im Schnitt ein Potentiometer-Leiterbahn-System zeigt, näher erläutert.

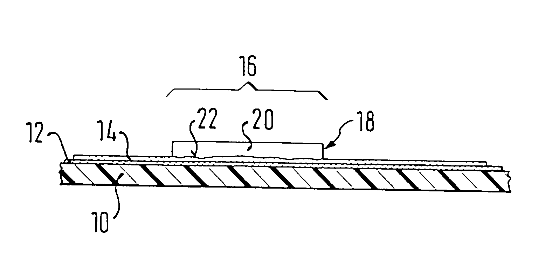

Die Figur zeigt im stark vergrößerten Maßstab eine auf einer Leiterplatte 10 angeordnete Leiterbahn 12. Die Leiterbahn 12 ist mit einer Schutzschicht 14, beispielsweise aus Gold, versehen. Die Schutzschicht weist eine Dicke von vorzugsweise weniger als 2 µm auf. In einem Bereich 16 der Leiterbahn 12 bzw. der Schutzschicht 14 ist eine Potentiometerbahn 18 angeordnet, welche beispielsweise aus einem elektrisch leitenden Kunststoffpaste-Kohle-Material 20 besteht. Auf die Darstellung von Abgriffselementen des Potentiometers wurde aus Gründen der Übersichtlichkeit verzichtet.

Der Bereich 16 der Schutzschicht 14 weist an seiner Oberfläche 22 eine Mikrorauhigkeit auf, die sich durch genau definierte Strukturen auszeichnet.

Die Rauhigkeit wird dadurch erreicht, indem an den Bereich 16 vor Aufbringen der Potentiometerbahn 18 hier nicht dargestellte Mittel herangeführt werden, die den Bereich 16 mit Feinstfeststoffpartikel mikrostrahlen. Die Mikrostrahlung erfolgt dabei beispielsweise so, daß die Feinstfeststoffpartikel, die eine Korngröße von weniger als 100 µm aufweisen, aus einem Abstand von 2 bis 50 cm, vorzugsweise 10 bis 30 cm auf die Oberfläche 22 gestrahlt werden.

Durch den Aufprall der Feinstfeststoffpartikel auf die Oberfläche 22 der Leiterbahn 12 bzw. der Schutzschicht 14 mit einer bestimmten kinetischen Energie werden entsprechend der Größe und der Form der Feinstfeststoffpartikel Oberflächenstrukturen in genau definierter Art und Weise geschaffen.

Die Mikrorauhigkeit wird dabei so eingestellt, daß selbst die tiefste Rauhtiefe in der Schutzschicht 14 diese nicht durchbricht.

Nach Einstellung der Mikrorauhigkeit wird die Potentiometerbahn 18 auf den Bereich 16 aufgebracht. Das Aufbringen des elektrisch leitenden Kunststoffpaste-Kohle-Materials erfolgt durch Siebdruck, durch Aufwalzen oder ähnliche geeignete Verfahren.

Indem die Mikrorauhigkeit des Bereichs 16 in das weichere Kunststoffpaste-Kohle-Material 20 abgebildet wird, haftet dieses in einem ausreichend großen Maße an der Leiterbahn 12 bzw. Schutzschicht 14 fest.

Das gesamte Potentiometersystem wird anschließend ausgehärtet bzw. eingebrannt. Durch die gute Haftung ist ein genau definierter elektrischer Widerstandswert des Potentiometers 18 gegeben, der eine hohe Einstellgenauigkeit zuläßt.

Es ist selbstverständlich auch möglich, den mit der Mikrorauhigkeit behafteten Bereich 16 direkt auf der Leiterbahn 12 vorzusehen, für den Fall, daß keine Schutzschicht 14 vorhanden ist.

## Patentansprüche

1. Verfahren zur Herstellung einer haftfesten Verbindung zwischen einer auf einer Leiterplatte (10) angeordneten Leiterbahn (12) aus Metall und einer leitenden Kunststoffschicht,
dadurch gekennzeichnet, daß
die Leiterbahn vor dem Aufbringen der leitenden Kunststoffschicht im Bereich der Kunststoffschicht durch Mikrostrahlen mit Feinstfeststoffpartikeln aus einer Entfernung von 2 bis 50 cm mit einer definierten Mikrorauhigkeit versehen und anschließend das leitende Kunststoffmaterial (20) auf den aufgerauhten Bereich aufgebracht wird.

2. Verfahren nach Anspruch 1, **dadurch gekennzeichnet**, daß die Mikrorauhigkeit durch Mikrostrahlen mit Feinstfeststoffpartikel aus einer Entfernung von 10 bis 30 cm erzeugt wird.

3. Verfahren nach einem der vorhergehenden Ansprüche, **dadurch gekennzeichnet**, daß als Strahlungsmedium Luft oder Flüssigkeit verwendet wird.

4. Verfahren nach einem der vorhergehenden Ansprüche, **dadurch gekennzeichnet**, daß die zu strahlenden Feinstfeststoffpartikel eine Größe von 10 bis 100 µm, vorzugsweise 20 bis 50 µm, aufweisen.

5. Verfahren nach einem der vorhergehenden Ansprüche, **dadurch gekennzeichnet**, daß die Mikrorauhigkeit mit so geringer Rauhtiefe erzeugt wird, daß eine auf der Leiterbahn vorhandene, vorzugsweise elektrisch leitende Schutzschicht (14) mit einer Stärke von vorzugsweise weniger als 2 µm nicht durchbrochen wird.

6. Verfahren nach einem der vorhergehenden Ansprüche, **dadurch gekennzeichnet**, daß als leitendes Kunststoffmaterial (20) Kunststoffpaste-Kohle-Material auf den mikroaufgerauhten Bereich durch Siebdruck oder durch Aufwalzen aufgebracht wird und das gesamte Potentiometersystem anschließend ausgehärtet bzw. eingebrannt wird.

## Claims

1. Method of producing a joint with good adhesive strength between a conductor track (12), which is made of metal and arranged on a printed circuit board (10), and a conductive plastic layer, characterized in that, before the application of the conductive plastic layer, the conductor track is provided with a defined microroughness in the region of the plastic layer by abrasive microblasting with very fine solid particles from a distance of 2 to 50 cm, and the conductive plastic material (20) is then applied to the roughened region.

2. Method according to Claim 1, characterized in that the microroughness is produced by abrasive microblasting with very fine solid particles from a distance of 10 to 30 cm.

3. Method according to one of the preceding claims, characterized in that air or liquid is used as abrasive blasting medium.

4. Method according to one of the preceding claims, characterized in that the very fine solid particles to be used for abrasive blasting have a size from 10 to 100 µm, preferably 20 to 50 µm.

5. Method according to one of the preceding claims, characterized in that the microroughness is produced with such a low peak-to-valley height that a protective layer (14), which is present on the printed circuit board, is preferably electrically conductive and has a thickness of preferably less than 2 µm, is not penetrated.

6. Method according to one of the preceding claims, characterized in that plastic paste/carbon material is applied, as conductive plastic material (20), to the microroughened region by means of screen printing or rolling on, and the entire potentiometer system is subsequently cured or baked.

## Revendications

1. Procédé de fabrication d'une liaison de bonne adhésion entre un chemin conducteur (12) en métal sur une plaque de circuit imprimé (10) et une couche de matière plastique conductrice,
caractérisé en ce qu'
avant d'appliquer la couche de matière plastique conductrice, le chemin conducteur reçoit une microrugosité définie réalisée par des microjets de particules solides très fines à partir d'un éloignement de 2 à 50 cm puis la matière plastique conductrice (20) est appliquée sur la zone rendue rugueuse.

2. Procédé selon la revendication 1,
caractérisé en ce que
la microrugosité est obtenue par des microjets de particules solides très fines d'un éloignement de 10 à 30 cm.

3. Procédé selon l'une quelconque des revendications précédentes,
caractérisé en ce que
le fluide d'entraînement du jet est de l'air ou un liquide.

4. Procédé selon l'une quelconque des revendications précédentes,
caractérisé en ce que
les microparticules solides, très fines des jets ont une taille de 10 à 100 µm et de préférence de 20 à 50 µm.

5. Procédé selon l'une quelconque des revendications précédentes,
caractérisé en ce que
la microrugosité est réalisée avec une profondeur faible pour qu'une couche protectrice (14) de préférence conductrice d'électricité, prévue sur le chemin conducteur et ayant une épaisseur de préférence inférieure à 2 µm ne soit pas traversée.

6. Procédé selon l'une quelconque des revendications précédentes,
caractérisé en ce que
la matière plastique conductrice (20) est une pâte de matière plastique et de carbone appliquée sur la zone à mi-crorugosités par sérigraphie ou laminage et l'ensemble du système du potentiomètre est alors cuit ou durci.
